Europäisches Patentamt

European Patent Office

Office européen des brevets

(11) Veröffentlichungsnummer: **0 195 115**
**B1**

(12) EUROPÄISCHE PATENTSCHRIFT

(45) Veröffentlichungstag der Patentschrift: **19.09.90**

(21) Anmeldenummer: **85109911.9**

(22) Anmeldetag: **07.08.85**

(51) Int. Cl.⁵: **F 16 J 15/32**

(54) Dichtring.

(30) Priorität: **19.03.85 DE 3509840**

(43) Veröffentlichungstag der Anmeldung:
**24.09.86 Patentblatt 86/39**

(45) Bekanntmachung des Hinweises auf die
Patenterteilung:
**19.09.90 Patentblatt 90/38**

(84) Benannte Vertragsstaaten:
**AT BE CH DE FR GB IT LI NL SE**

(56) Entgegenhaltungen:
**GB-A-2 085 983**
**US-A-4 475 738**

(73) Patentinhaber: **Firma Carl Freudenberg**
**Höhnerweg 2-4**
**D-6940 Weinheim/Bergstrasse (DE)**

(72) Erfinder: **Bender, Richard**
**Siegfriedring 8**
**D-6149 Grasellenbach (DE)**
Erfinder: **Habel, Erich**
**Alfred-Delp-Strasse 2**
**D-6149 Fürth (DE)**

Courier Press, Leamington Spa, England.

## Beschreibung

Die Erfindung betrifft einen Dichtring für ein *hin- und hergehendes Maschinenteil, umfassend* ein Dichtelement aus polymerem Werkstoff, das mit wenigstens einer Dichtlippe versehen ist, die elastisch an das relativ bewegte Maschinenteil angepreßt ist.

Ein solcher Dichtring ist aus der GB-A-20 85 983 bekannt. Er ist für die Abdichtung einer hin- und hergehenden Stange bestimmt und mit einer die Stange konzentrisch umschließenden Dichtlippe versehen, die mit der Stange in allen Umfangsbereichen in einer übereinstimmenden, sich senkrecht zur Bewegungsrichtung erstreckenden Ebene in Eingriff steht.

Der Erfindung liegt die Aufgabe zugrunde, einen Dichtring für ein hin- und hergehendes Maschinenteil zu zeigen, der die Erzielung eines ausgezeichneten Abdichtungsergebnisses gewährleistet und der weitgehend unempfindlich ist im Hinblick auf in dem abgedichteten Medium enthaltene Fremdstoffe.

Diese Aufgabe wird erfindungsgemäß bei einem Dichtring der eingangs genannten Art dadurch gelöst, daß die Dichtlippe einen dem Querschnitt des relativ bewegten Maschinenteils angepaßten Verlauf besitzt und einer sich quer zur Bewegungsrichtung erstreckenden Ebene derart geneigt zugeordnet ist, daß sich in Umfangsrichtung aufeinanderfolgende Bereiche ergeben, die eine seitliche Verlagerung des abgestreiften Mediums in tangential entgegengesetzten Richtungen bewirken, und daß die Bereiche lückenlos ineinander übergehend ein axial undurchlässiges Dichtband bilden.

Die Dichtlippe des erfindungsgemäßen Dichtringes ist der Bewegungsrichtung des relativ bewegten Maschinenteiles im wesentlichen in allen Bereichen schräg zugeordnet, was eine seitliche Verlagerung des abgestreiften Mediums während der Durchführung des Abstreifvorganges bedingt. Eine Intensivierung der Durchmischung des abgestreiften Volumens in sich selbst ist hiervon die Folge. Sie ergibt sich aus der gegenseitigen Überlagerung der Umwälzung des abgestreiften Volumens in Bewegungsrichtung mit einer entsprechenden Umwälzung in Umfangsrichtung. Eine ausgezeichnete Schmierung der dynamischen Abdichtungszone ist hierdurch stets gewährleistet, die Entstehung von Anbackungen in diesem kritischen Bereich wird wirksam verhindert.

Die Dichtlippe kann innerhalb eines jeden Bereiches eine gleichbleibende Neigung aufweisen, was neben einem geradlinigen Verlauf eine sprunghafte Richtungsänderung an einer jeden Übergangsstelle zu dem benachbarten Bereich bedingt.

Entsprechende Ausführungen lassen sich besonders kostengünstig erzeugen.

Im Hinblick auf die Erzielung einer besonders guten Dauerhaftigkeit hat es sich demgegenüber als vorteilhafter bewährt, wenn die Dichtlippe innerhalb eines jeden Bereiches eine sich verändernde Neigung aufweist, und wenn sie benachbarte Bereiche ohne sprunghafte Neigungsänderung verbindet. Das sich in diesem Fall ergebende *Dichtband hat einen sinuskurvenähnlich ausgebildeten Verlauf.*

Die durch die Neigung der Dichtlippe verursachte Umwälzung des abgestreiften Mediums in sich selbst erfährt mit zunehmender Steilheit des Neigungswinkels eine Intensivierung, was an sich von Vorteil ist. Steile Neigungswinkel machen es indessen unter Berücksichtigung üblicher Baugrößen zunehmend schwieriger, eine ausreichend gleichmäßige Anpressung der Dichtlippe an das relativ bewegte Maschinenteil zu gewährleisten. Ausführungen, bei denen die Dichtlippe eine maximale Neigung von 5°, vorzugsweise von 3° aufweist, werden aus diesem Grunde bevorzugt.

Der erfindungsgemäße Dichtring gelangt bevorzugt zur Anwendung bei der Abdichtung von Kolbenstangen. Die Anpreßrichtung der Dichtlippe ist in diesem Falle nach innen gerichtet.

Ausführungen, bei denen die Dichtlippe eine nach außen gerichtete Anpreßrichtung aufweist, eignen sich für die Abdichtung von Kolben.

Die Gestalt der Dichtlippe ist somit in jedem Fall an die Gestalt des abzudichtenden Maschinenteiles angepaßt, wobei sich im Einzelfalle auch Abweichungen von der üblichen, rotationssymmetrischen Gestalt ergeben können. Ein ovales Profil, ein polygonförmiges Profil oder ein durch eine Mischform aus verschiedenen Profilen geprägter Querschnitt des relativ bewegten Maschinenteiles ist ohne weiteres möglich, beispielsweise ein Querschnitt, bei dem ebene Flächen, leicht und stark gewölbte Flächen ineinander übergehend verbunden sind. Neben einer großen Steifigkeit bei geringem Gewicht lassen sich durch eine entsprechende Ausbildung Drehkräfte über die Verbindungszone der abgedichteten Teile übertragen, was für bestimmte Anwendungen von großem Vorteil ist. Ein gutes Abdichtungsergebnis bei langer Gebrauchsdauer ist dennoch in jedem Fall gewährleistet.

In Fällen, in denen der Dichtring zur Verwendung bei der Abdichtung eines relativ bewegten Maschinenteiles mit wenigstens einer sich parallel zu der Bewegungsrichtung erstreckenden Planfläche vorgesehen ist, hat es sich als vorteilhaft bewährt, wenn der die Planfläche abdichtende Abschnitt der Dichtlippe durchgehend im gleichen Richtungssinne geneigt ist. Das von der Planfläche abgestreifte, abgedichtete Medium wird durh eine entsprechende Ausbildung in besonders großem Maße kumuliert, was es stark erleichtert, Fremdkörper aus dem Bereich der dynamischen Abdichtungszone zu entfernen.

Bei einer entsprechenden Ausführung eines Dichtringes hat die Dichtlippe in ihrer Gesamtheit jedoch eine relativ große axiale Erstreckung, was nicht immer tolerierbar ist. Im Hinblick auf die Erzielung einer möglichst kleinen axialen Baulänge hat es sich daher als vorteilhaft bewährt, wenn der die Planfläche abdichtende Abschnitt der Dichtlippe zwei benachbarte Bereiche einer entgegengesetzten Neigungsrichtung aufweist. Diese sind zweckmäßig so geneigt, daß die Dichtlippe in der Zone der gegenseitigen Verbindung beider Bereiche in den abgedichteten Raum vorspringt. Eine schiffsbugähnliche Ausbildung der Dichtlippe im Bereich der Planfläche hat sich als zweckmäßig erwiesen, wobei die beiden benachbarten Bereiche der Dichtlippe zweckmäßig gleichmäßig ineinander übergehend ausgebildet sind, d.h. mit einem gerundeten Verlauf der Dichtlippe.

Eine beispielhafte Ausführung des erfindungsgemäß vorgeschlagenen Dichtringes ist in der als Anlage beigefügten Zeichnung dargestellt. Er wird nachfolgend näher erläutert:

Der gezeigte Dichtring ist für eine Festlegung in einer zylindrischen Bohrung bestimmt sowie für die dynamische Abdichtung einer sich in der Bohrung axial hin- und herbewegenden Stange von quadratischem Profil.

Der Dichtring weist ein Profil von im wesentlichen x-förmiger Gestalt auf, das außenseitig durch axial vorspringende, statisch wirkende Dichtlippen gegenüber der nicht dargestellten, zylindrischen Gehäusebohrung abgedichtet ist und innenseitig durch axial vorspringende, dynamisch wirkende Dichtlippen gegenüber der abzudichtenden Stange.

Die statisch wirkenden Dichtlippen sind auf dem gesamten Umfang durch ein gleichbleibendes Profil gekennzeichnet, das lediglich an der Stelle eines als Verdrehsicherung wirkenden Vorsprunges eine Aufweitung erfährt.

Die dynamisch wirkenden Dichtlippen sind demgegenüber in Richtung des mittleren Teiles einer jeden Dichtfläche der abzudichtenden Stange zunehmend verdickt und einwärts vorgewölbt.

Die statisch wirkenden Dichtlippen sind dementsprechend von kreisförmiger Gestalt, die dynamisch wirkenden Dichtlippen in etwa an das quadratische Profil der abzudichtenden Stange angepaßt. Sie sind kontinuierlich ineinander übergehend ausgebildet, und die im mittleren Bereich angeordnete, einwärts gerichtete Wölbung erfährt durch die Einführung der abzudichtenden Stange eine axiale Verlagerung, was zu einer Schrägstellung der Dichtlippe in bezug auf die Bewegungsrichtung der abzudichtenden Stange führt. Die sich durch die Schrägstellung der Dichtlippe ergebende Neigung in bezug auf die Bewegungsrichtung ist in verschiedenen Zonen unterschiedlich und weist in Richtung der beiderseitigen Begrenzungen der abgedichteten Planflächen zunehmend größere Werte auf als im mittleren Bereich. Das unter Betriebsbedingungen von der abgedichteten Stange abgestreifte Mediumsvolumen erfährt hierdurch eine intensive, aus dem Bereich einer jeden Planfläche herausführende Umwälzung, was ein Eindringen von Fremdkörpern in den Dichtspalt in diesem kritischen Bereich außerordentlich erschwert.

Die einzelnen Volumina treffen anschließend im Bereich der Ecken des Profils der abgedichteten Stange massiert aufeinander, was neben der eigentlichen Kumulierung zu starker Walkbewegung führt. Fremdkörper können daher auch in diesem Bereich nicht in die kritische Zone zwischen der Dichtlippe und dar abgedichteten Stange eindringen. Die ausgezeichneten Gebrauchseigenschaften des erfindungsgemäßen Dichtringes dürften vor allem auf diese vorstehend beschriebenen Effekte zurückzuführen sein.

Die Schrägstellung der Dichtlippe ist über die Breite einer jeden Dichtfläche der abgedichteten Stange symmetrisch variiert. Die Anpressung an die abzudichtende Stange beruht auf der Eigenelastizität des verwendeten elastomeren Werkstoffes. Sie ist durch die Vergrößerung des Querschnittes der dynamisch wirkenden Dichtlippen in Richtung der Mitte einer jeden abgedichteten Fläche vollkommen ausgeglichen. Auch nach langem Gebrauch sind daher Veränderungen des Abdichtungsergebnisses nicht zu erwarten. Bei dem verwendeten elastomeren Werkstoff handelt es sich um ein elastomeres Polyurethan der Härte Shore A von 80 - 95. Die Verwendung von Gummi ist natürlich ebenfalls möglich.

Der erfindungsgemäße Dichtring ermöglicht eine wesentliche Verbesserung der bisher erzielten Gebrauchseigenschaften. Er ist relativ einfach und dementsprechend kostengünstig herstellbar und eignet sich sowohl für die Abdichtung flüssiger als auch für die Abdichtung gasförmiger Stoffe.

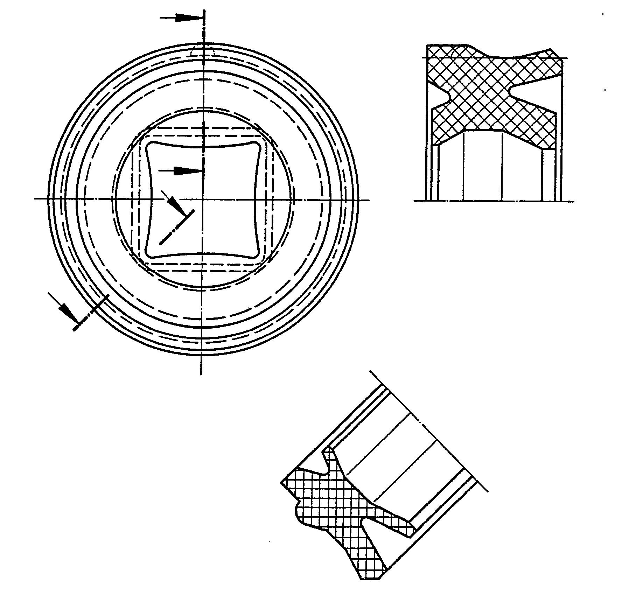

**Patentansprüche**

1. Dichtring für ein hin- und hergehendes Maschinenteil, umfassend ein Dichtelement aus polymerem Werkstoff, das mit wenigstens einer Dichtlippe versehen ist, die elastisch an das relativ bewegte Maschinenteil angepreßt ist, dadurch gekennzeichnet, daß die Dichtlippe einen dem Querschnitt des relativ bewegten Maschinenteils angepaßten Verlauf besitzt und einer sich quer zur Bewegungsrichtung erstreckenden Ebene derart geneigt zugeordnet ist, daß sich in Umfangsrichtung aufeinanderfolgende Bereiche ergeben, die eine seitliche Verlagerung des abgestreiften Mediums in tangential entgegengesetzten Richtungen bewirken und daß die Bereiche lückenlos ineinander übergehend ein axial undurchlässiges Dichtband bilden.

2. Dichtring nach Anspruch 1, dadurch gekennzeichnet, daß die Dichtlippe innerhalb eines jeden Bereiches eine gleichbleibende Neigung aufweist.

3. Dichtring nach Anspruch 1, dadurch gekennzeichnet, daß die Dichtlippe innerhalb eines jeden Bereiches eine sich verändernde Neigung aufweist und daß sie benachbarte Bereiche ohne sprunghafte Neigungsänderung verbindet.

4. Dichtring nach Anspruch 1 bis 3, dadurch gekennzeichnet, daß die Dichtlippe eine maximale Neigung von 5° aufweist.

5. Dichtring nach Anspruch 1 bis 4, dadurch gekennzeichnet, daß die Dichtlippe eine maximale Neigung von 3° aufweist.

6. Dichtring nach Anspruch 1 bis 5 zur Verwendung bei der Abdichtung eines relativ bewegten Maschinenteils mit wenigstens einer sich parallel zu der Bewegungsrichtung erstreckenden Planfläche, dadurch gekennzeichnet, daß der die Planfläche abdichtende Abschnitt der Dichtlippe im gleichen Richtungssinne geneigt ist.

7. Dichtring nach Anspruch 1 bis 5 zur Verwendung bei der Abdichtung eines relativ bewegten Maschinenteiles mit wenigstens einer sich parallel zu der Bewegungsrichtung erstreckenden Planfläche, dadurch gekennzeichnet, daß der die Planfläche abdichtende Abschnitt der Dichtlippe zwei benachbarte Bereiche einer entgegengesetzten Neigungsrichtung aufweist.

8. Dichtring nach Anspruch 7, dadurch gekennzeichnet, daß die benachbarten Bereiche so geneigt sind, daß die Dichtlippe in der Zone der gegenseitigen Verbindung der Bereiche in den abgedichteten Raum vorspringt.

## Revendications

1. Bague d'étanchéité pour pièce de machine à mouvement alternatif comprenant un élément d'étanchéité en matérieu polymère qui est pourvu d'au moins une lèvre d'étanchéité qui est pressée élastiquement contre la pièce de machine à déplacement relatif, caractérisée en ce que la lèvre d'étanchéité présente un profil adapté à la section de la pièce de machine à mouvement relatif et est disposée obliquement par rapport à un plan s'étendant transversalement à la direction de déplacement, en ce qu'il existe des zones se succédant les unes aux autres en direction de la périphérie qui provoquent un déplacement latéral du fluide repoussé dans des directions tangentiellement opposées et en ce que ces zones constituent une bande d'étanchéité axialement imperméable en se prolongeant les unes les autres sans intervalle.

2. Bague détanchéité selon la revendication 1, caractérisée en ce que la lèvre d'étanchéité présente une inclinaison constante dans chacune de ces zones.

3. Bague d'étanchéité selon la revendication 1, caractérisée en ce que la lèvre d'étanchéité présente une inclinaison variable dans chaque zone et que les zones voisines sont assemblées sans modification brusque de l'inclinaison.

4. Bague d'étanchéité selon les revendications 1 à 3, caractérisée en ce que la lèvre d'étanchéité présente une inclinaison maximale de 5°.

5. Bague d'étanchéité selon les revendications 1 à 4, caractérisée en ce que la lèvre d'étanchéité présente une inclinaison maximale de 3°.

6. Bague d'étanchéité selon les revendications 1 à 5, à utiliser pour rendre étanche une pièce de machine à mouvement relatif avec au moins une surface plane s'étendant parallèlement à la direction de déplacement, caractérisée en ce que la section de la lèvre d'étanchéité qui rend la surface plane étanche est inclinée dans la même direction.

7. Bague d'étanchéité selon les revendications 1 à 5, à utiliser pour rendre étanche une pièce de machine à mouvement relatif avec au moins une surface plane s'étendant parallèlement à la direction de déplacement, caractérisée en ce que la section de la lèvre d'étanchéité rendant la surface plane étanche présente deux zones voisines avec des directions d'inclinaison opposées.

8. Bague d'étanchéité selon la revendication 7, caractérisée en ce que les zones voisines sont inclinées de façon à ce que la lèvre d'étanchéité fasse saillie dans l'enceinte à rendre étanche à l'endroit de l'assemblage mutuel de ces zones.

## Claims

1. A sealing ring for a machine part, which moves back and forth, comprising a sealing element of polymeric material which is provided with at least one sealing lip which is pressed resiliently onto the relatively moved machine part, characterised in that the sealing lip has a course which is adapted to the cross-section of the relatively moved machine part and which is associated with a plane extending transversely to the direction of movement at such an inclination that regions following one after the other in the circumferential direction result, which regions effect a lateral displacement of the scraped-off medium in tangentially opposed directions, and in that the regions, merging into one another without gaps, form an axially impermeable sealing band.

2. A sealing ring according to claim 1, characterised in that the sealing lip has a constant inclination within each region.

3. A sealing ring according to claim 1, characterised in that the sealing lip has a varying inclination within each region, and in that it connects adjacent regions without abrupt changes in inclination.

4. A sealing ring according to any of claims 1 to 3, characterised in that the sealing lip has a maximum inclination of 5°.

5. A sealing ring according to any of claims 1 to 4, characterised in that the sealing lip has a maximum inclination of 3°.

6. A sealing ring according to any of claims 1 to 5 for use in the sealing of a relatively moved machine part having at least one flat surface extending parallel to the direction of movement, characterised in that the section of the sealing lip sealing the flat surface is inclined in the same direction.

7. A sealing ring according to any of claims 1 to 5 for use in the sealing of a relatively moved machine part having at least one flat surface extending parallel to the direction of movement, characterised in that the section of the sealing lip sealing the first flat surface has two adjacent regions of opposite directions of inclination.

8. A sealing ring according to claim 7, characterised in that the adjacent regions are inclined in such a way that the sealing lip projects into the sealed-off space in the zone of the mutual connection of the regions.